# EUROPEAN PATENT APPLICATION

(11) **EP 2 749 508 A1**
(43) Date of publication of application: **02.07.2014**
(21) Application number: 12835821.5
(22) Date of filing: 28.09.2012
(51) Int. Cl.: B65D 90/04, B65D 90/50, B29C 63/26

(54) **METHOD FOR ELIMINATING PORES IN WALLS OF HYDROCARBON RESERVOIRS**

(30) Priority: 28.09.2011 ES 201131565
(71) Applicant: Construcciones Biovivienda, S.l., 46260 ALBERIC (Valencia) (ES)
(72) Inventor: MARTÍNEZ NAVARRETE, Antonio, E-46260 Alberic (Valencia) (ES); MARTÍNEZ NAVARRETE, Maximino, E-46260 Alberic (Valencia) (ES); MARTÍNEZ NAVARRETE, Rafael, E-46260 Alberic (Valencia) (ES)
(74) Representative: Ungria López, Javier
(86) International application number: PCT/ES2012/070675
(87) International publication number: WO 2013/045739

(57) **Abstract**

Such reservoirs comprise, in principle, an outer wall (2), an inner wall (4) containing at least one pore (6), and an intermediate layer (3) formed by an interstitial space (3") combined with a three-dimensional fabric (3') that is joined to said walls (2-4), the pores (6) enabling communication between the inner space of the reservoir and the interstitial space (3") pertaining to the intermediate layer (3). The invention is characterised in that the method consists in applying at least one end layer of resin (5) in a liquid state to the free face of the inner wall (4), in conjunction with a vacuum system (7) connected to the interstitial space (3") of the intermediate layer (3), said vacuum system (7) pulling a portion (1) of the material of the end layer of resin (5), which then occupies at least some of the pores (6), thereby closing same.

## Description

### OBJECT OF THE INVENTION

The present invention, as expressed in the title of this specification, relates to a method for eliminating pores in walls of hydrocarbon reservoirs of the type that comprise an outer wall and an inner wall, joined to one another by means of an intermediate layer integrating a three-dimensional fabric combined with an interstitial space, such that the method of the invention is intended to eliminate the pores produced in the inner wall which free face is in contact with the product to be stored.

It should be noted that in these double-walled reservoirs, the inner wall normally comprises a resin coating applied in successive layers, even though the method is applicable to other reservoirs integrating an inner wall of a material other than resin.

### BACKGROUND OF THE INVENTION

Current double-walled reservoirs, such as the one described in invention patent identified with application number 9401119 in Spain by the same owner of the current patent, must have perfect airtightness conditions, given that the materials being stored could be highly toxic.

Current methods do not ensure the closing of the pores that can be generated during the application of the inner resin coating constituting the inner wall of the reservoir, specifically the layer of material that is in contact with the product to be stored.

These pores can bring about leakages towards an interstitial space forming part of an intermediate layer, located between the two walls of the reservoir and prejudice the airtightness thereof and/or any other checking operation carried out at said intermediate layer integrating the interstitial space combined with the three-dimensional fabric.

### DESCRIPTION OF THE INVENTION

For the purpose of reaching the objectives and avoiding the inconveniences mentioned in the previous sections, the invention proposes a method for eliminating pores in walls of hydrocarbon reservoirs, which in principle comprise the following:
- An outer wall.
- An inner wall presenting the anomaly of incorporating at least one pore.
- An intermediate layer made up by an interstitial space combined with a three-dimensional fabric joined to the aforementioned walls, the pores enabling communication between the inner space of the reservoir and the interstitial space pertaining to the aforementioned intermediate space.

Based on this premise, the method of the invention is characterised in that it consists of applying at least one end layer of resin in a liquid state to the free face of the inner wall, in conjunction with the application of a vacuum system connected to the interstitial space of the intermediate layer, said vacuum system pulling a portion of the material of the end layer of resin in a liquid state, which then occupies at least some of the pores thereby closing same, without said portion reaching the interstitial space of the intermediate layer at any time.

It should be noted that the single or several end layers of resin form part of the resin material making up the inner wall in an embodiment of the invention, remarking that, in other embodiments, the inner wall can comprise a different material in the aforementioned end layer of resin.

The absolute pressure of the vacuum system to pull the portions in a liquid state of the end layer of resin towards the pores of the inner wall varies between 0.010 kg/cm² and 0.8 kg/cm².

Next, in order to provide a better understanding of this specification and being an integral part thereof, figures representing the object of the invention in an illustrative rather than limitative manner have been attached.

### BRIEF DESCRIPTION OF THE DRAWINGS

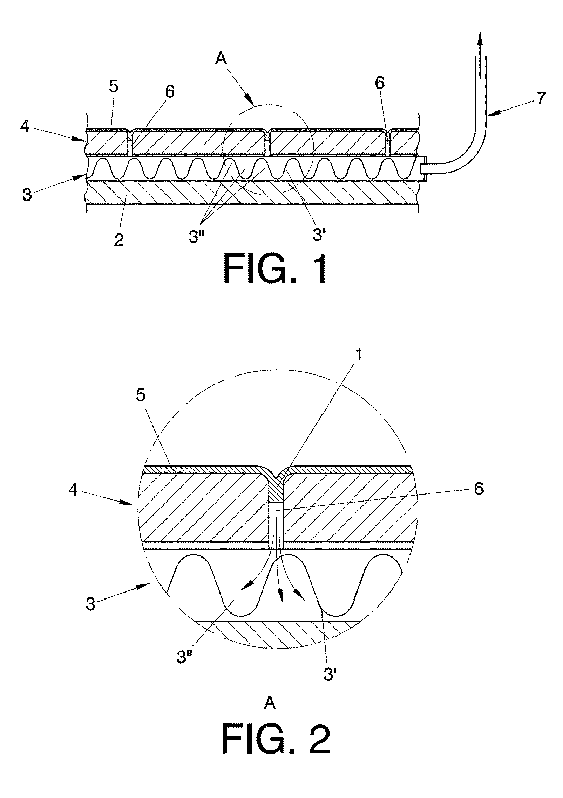

Figure 1.- Shows a sectioned view of a double wall of a reservoir to which the method for eliminating pores in walls of hydrocarbon reservoirs object of the invention is applied. The pores are closed by means of a resin material in a liquid state using a suction system. Thereafter, said resin solidifies, ensuring the final closing of the pores.
Figure 2.- Shows a detailed view of the closing of a pore produced in the inner wall of the reservoir.

### DESCRIPTION OF AN EMBODIMENT OF THE INVENTION

The reservoir to which the method of the invention is applied comprises, in principle, an outer wall 2, an inner wall 4 on which pores 6 have been generated, which must be closed to achieve the airtightness of the reservoir, and an intermediate layer 3 integrating a three-dimensional fabric 3' combined with an interstitial space 3", such that the pores 6 enable, in principle, communication between the inner space of the reservoir where the stored hydrocarbon is housed, and the interstitial space 3" pertaining to the intermediate layer 3.

Therefore, the inner coating process of the reservoir for the producing of the double wall and the intermediate layer 3 entails a phase wherein the inner wall 4 is formed from the resin material, such that, once said inner wall 4 is formed an end layer of resin 5 in a liquid state is applied to the free face of the inner wall 4 combined with the activation of a vacuum system 7 in one phase, which is applied in correspondence with the intermediate layer 3, in such a way that if pores 6 have been produced during the formation of the inner wall 4, the suction effect caused by the vacuum system 7 in the interstitial space 3" pulls a portion 1 in a liquid or pasty state, thereby closing the pores 6 previously produced in the inner wall 4 such that said portion 1 of resin penetrates the pores 6 without reaching the interstitial space 3" of the intermediate layer 3. Thereafter, said portion 1 solidifies inside the pores 6, guaranteeing the final closing thereof.

Therefore, the vacuum system 7 is connected to the interstitial space 3" of the intermediate layer 3 to produce the degree of suction or vacuum necessary to close the pores 6 of the inner wall 4, such that said vacuum system is activated with a certain depressurization or negative pressure, combined with the viscosities of the end layer of resin 5 with which the hydrocarbon contained inside the reservoir finally makes contact.

The end layer of resin 5 usually constitutes one or several final coats of resin forming the inner wall 4 of the reservoir in practice.

Evidently, it is very important to control the viscosity of the resin and the negative pressure applied to the vacuum system 7, which absolute pressure varies at around 0.4 kg/cm².

The operation of vacuum (negative pressure) is carried out for a period of time beginning with the application of the end layer of resin 5 and ending when the same reaches a gel state, this time period being established at between 5 and 40 minutes depending on the initial viscosity of the end layer of resin 5.

The time in a gel state of the end layer of resin 5 varies between 14 and 20 minutes, while the curing time thereof varies between 23 and 35 minutes.

Once the process is complete, the interstitial space 3" of the intermediate layer 3 is always subjected to several verifications with positive pressure and precision vacuum gauges, capable of detecting the potential existence of pores that were not closed or covered correctly with the application of the method of the invention.

If once several minutes have gone by the vacuum gauge does not register variations in the pressure, the reservoir will be correct.

On the other hand, the viscosity of the end layer of resin 5 varies between 0.9 and 3.5 Pa during a time period comprised between 2 and 250 seconds.

## Claims

1. **Method for eliminating pores in walls of hydrocarbon reservoirs, the reservoirs** comprising:
- an outer wall (2);
- an inner wall (4) containing at least one pore (6);
- an intermediate layer (3) formed by an interstitial space (3") combined with a three-dimensional fabric (3') joined to said walls (2-4), the pores (6) communicating the inner space of the reservoir and the interstitial space (3") pertaining to the intermediate layer (3);
**characterised in that**
- it consists of applying at least one end layer of resin (5) in a liquid state with a certain viscosity to the free face of the inner wall (4), in conjunction with applying a vacuum system (7) connected to the interstitial space (3") of the intermediate layer (3);
- said vacuum system (7) pulls a portion (1) of the material of the end layer of resin (5);
- the portion (1) pulled from the resin material fills at least some of the pores (6), thereby closing same.

2. **Method for eliminating pores in walls of hydrocarbon reservoirs** according to claim 1, **characterised in that** the end layer of resin (5) forms part of the resin material forming the inner wall (4).

3. **Method for eliminating pores in walls of hydrocarbon reservoirs** according to any one of the previous claims, **characterised in that** the absolute pressure of the vacuum system (7) to pull the portions (1) in a liquid state of the layer of resin (5) towards the pores (6) produced at the inner wall (4) varies between 0.010 kg/cm² and 0.8 kg/cm².

4. **Method for eliminating pores in walls of hydrocarbon reservoirs** according to any one of the previous claims **characterised in that** the vacuum system (7) is activated for a period of time beginning with the application of the end layer of resin (5) and ending when the same reaches a gel state.

5. **Method for eliminating pores in walls of hydrocarbon reservoirs** according to claim 4, **characterised in that** the period of time during which the vacuum system (7) remains activated varies between 5 and 40 minutes.
